# DEMANDE DE BREVET EUROPEEN

(11) **EP 1 096 239 A1**
(43) Date de publication de la demande: **02.05.2001**
(21) Numéro de dépôt: 00402934.4
(22) Date de dépôt: 24.10.2000
(51) Int. Cl.: G01G 19/00

(54) **Module de pesée dynamique muni d'un dispositif de maintien et de guidage d'articles de courrier**

(30) Priorité: 25.10.1999 FR 9913261
(71) Demandeur: NEOPOST INDUSTRIE, F-92220 Bagneux (FR)
(72) Inventeur: Czernysz, Christian, 95190 Goussainville (FR); Deshayes, Xavier, 78290 Croissy (FR); Le Jaoudour, Thierry, 91370 Verrieres le Buisson (FR)
(74) Mandataire: David, Alain

(57) **Abrégé**

Module de pesée dynamique (10) comportant un plateau de pesée (20), une paroi verticale longitudinale de mise en référence (32), des bandes d'entraînement (22, 62) pour le transport des articles de courrier (16) d'une position en amont de ce plateau vers une position en aval, et des moyens support (30) solidaires du module de pesée dynamique et sur lequel est monté au moins un élément d'appui (40, 42, 44) destiné à maintenir les articles de courrier sur le plateau de pesée lors de leur transport de ladite position en amont vers ladite position en aval, caractérisé en ce que ledit élément support est incliné vers ladite paroi de référence d'un angle déterminé α de façon à guider les articles du courrier contre ladite paroi longitudinale de mise en référence (32).

## Description

### Domaine de l'invention

La présente invention se rapporte au domaine spécifique du traitement de courrier. Elle vise tout particulièrement un module de pesée dynamique intercalé entre un alimenteur/extracteur et une machine d'affranchissement d'articles de courrier et muni d'un dispositif pour le guidage et le maintien en position de ces articles.

### Art antérieur

Les modules de pesée dynamique destinés à être mis en oeuvre avec des machines d'affranchissement sont bien connus. La demande française N°2 388 362 (POSTALIA) en illustre un exemple particulier. Ces dispositifs sont formés d'un plateau de pesée et de bandes d'entraînement pour le transport automatique des articles de courrier d'un bord à l'autre de ce plateau. Le module de pesée peut s'utiliser seul mais il est habituellement inséré dans un ensemble de traitement de courrier entre l'entrée du module d'affranchissement et la sortie du module d'alimentation/extraction d'où sont éjectées les enveloppes fermées devant être affranchies.

Dans ces ensembles de traitement, le transport des articles de courrier pendant l'étape de pesée à la volée (dite aussi dynamique) est particulièrement importante pour un bon déroulement de l'affranchissement. En effet, les défauts de positionnement sur le plateau de pesée peuvent d'une part entraîner des phénomènes de bourrage en entrée du module d'affranchissement et d'autre part des défauts au niveau de l'impression de l'empreinte postale qui n'est alors plus imprimée de façon parfaitement horizontale (un trait horizontal sera représenté par exemple sous une forme ondulée).

Or, les conséquences de tels défauts d'impression sont particulièrement importantes dans la mesure où l'empreinte postale étant une valeur monétaire, l'enveloppe risque d'être rejetée par l'administration des Postes.

Pour limiter ces défauts, le brevet US 4 856 604 a prévu de maintenir fermement au moyen de galets presseur les articles de courrier sur le plateau de pesée. Malheureusement, cette solution n'est pas suffisante pour éviter tous les mauvais positionnements des articles de courrier. Aussi, la demanderesse a cherché à identifier les causes principales de ces mauvais positionnements afin de trouver une solution globale à ces problèmes. Ces causes sont malheureusement multiples et tiennent tant au chargement des enveloppes qu'à leur fermeture. En effet, les enveloppes sont souvent remplies à la main de façon irrégulière, par exemple sans insérer les documents complètement au fond de l'enveloppe. Elles sont aussi insuffisamment écrasées. Il en résulte une fermeture imprécise des rabats qui perturbe son calage longitudinal le long du chemin de transport. Ces rabats comme le contenu de l'enveloppe peuvent aussi présenter un cintrage résultant d'une préparation préalable du courrier par liasse au moyen d'un élastique, ce qui, pour des enveloppes de forte épaisseur, peut favoriser un bourrage en entrée du module d'affranchissement. Enfin, la charge des articles de courrier dans le module d'alimentation/extraction n'est que rarement effectuée de façon optimale, c'est à dire avec un calage efficace le long du chemin de transport.

### Objet et définition de l'invention

L'invention se propose donc de résoudre ces problèmes de façon simple et économique en munissant le module de pesée d'un dispositif de maintien et de guidage garantissant une parfaite introduction des articles de courrier dans la machine à affranchir. Un but de l'invention est ainsi d'assurer un transfert précis des enveloppes de l'extracteur vers la machine à affranchir. Un autre but est d'assurer un maintien à plat des enveloppes.

Ces buts sont atteints par un module de pesée dynamique comportant un plateau de pesée, une paroi verticale longitudinale de mise en référence, des bandes d'entraînement pour le transport des articles de courrier d'une position en amont de ce plateau vers une position en aval et des moyens support solidaires du module de pesée dynamique et sur lequel est monté au moins un élément d'appui destiné à maintenir les articles de courrier sur le plateau de pesée lors de leur transport de ladite position en amont vers ladite position en aval, caractérisé en ce que ledit élément support est incliné vers ladite paroi de référence d'un angle déterminé α de façon à guider ces articles de courrier contre ladite paroi verticale longitudinale de mise en référence. Cet angle déterminé est compris entre quelques degrés et 35°, de préférence égal à environ 25°

Ainsi, le transport des articles de courrier sur le plateau de pesée s'effectue avec un parfait calage latéral garantissant une impression ultérieure particulièrement précise.

De préférence, ces moyens support sont constitués par la paroi verticale longitudinale de mise en référence. Ils peuvent aussi être constitués par une plaque présentant une forme en Γ avec une paroi verticale longitudinale formant la paroi verticale longitudinale de mise en référence et une paroi horizontale longitudinale formant support pour lesdits éléments d'appui.

Selon un premier mode de réalisation, l'élément d'appui comporte un bras de maintien élastique à l'extrémité duquel est fixé une brosse souple.

Selon un deuxième mode de réalisation, cet élément d'appui comporte un bras de maintien élastique à l'extrémité duquel est fixé un rouleau de pression souple, par exemple en mousse.

Selon un troisième mode de réalisation, cet élément d'appui comporte un bras de maintien élastique à l'extrémité duquel est fixé un patin souple formé de un ou plusieurs patins élémentaires juxtaposés.

Dans une variante de réalisation avantageuse, les moyens support comportent en outre un couvercle formant capot articulé pour le module de pesée dynamique. Ce couvercle peut constituer un plateau de pesée statique.

Avantageusement, le module de pesée dynamique peut comporter au niveau dudit élément d'appui une bande d'entraînement dont la largeur est moins égale à celle de la brosse ou du rouleau de pression.

### Brève description des dessins

D'autres caractéristiques et avantages de la présente invention ressortiront mieux de la description suivante, faite à titre indicatif et non limitatif, en regard des dessins annexés, sur lesquels:
- la figure 1 représente une vue en perspective d'un module de pesée muni d'un dispositif de guidage et de maintien selon l'invention,
- la figure 2 est une vue de dessus, capot ôté, du module de pesée de la figure 1,
- la figure 3 représente une vue en coupe d'une variante du dispositif de guidage et de maintien de la figure 1, et
- la figure 4 est une variante de réalisation du dispositif de guidage et de maintien.

### Description détaillée d'un mode préférentiel de réalisation

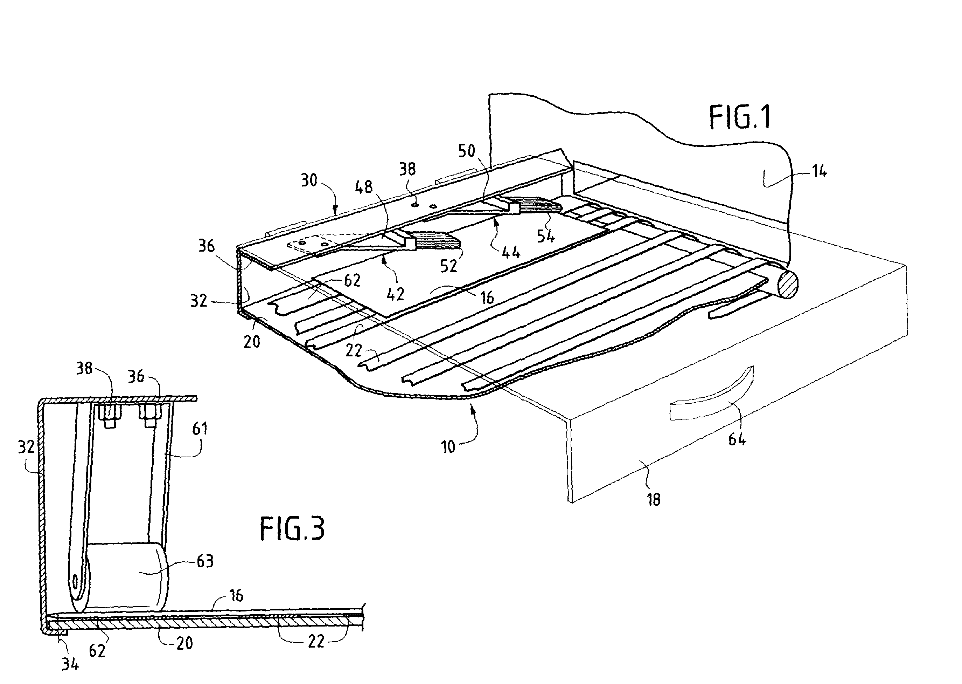

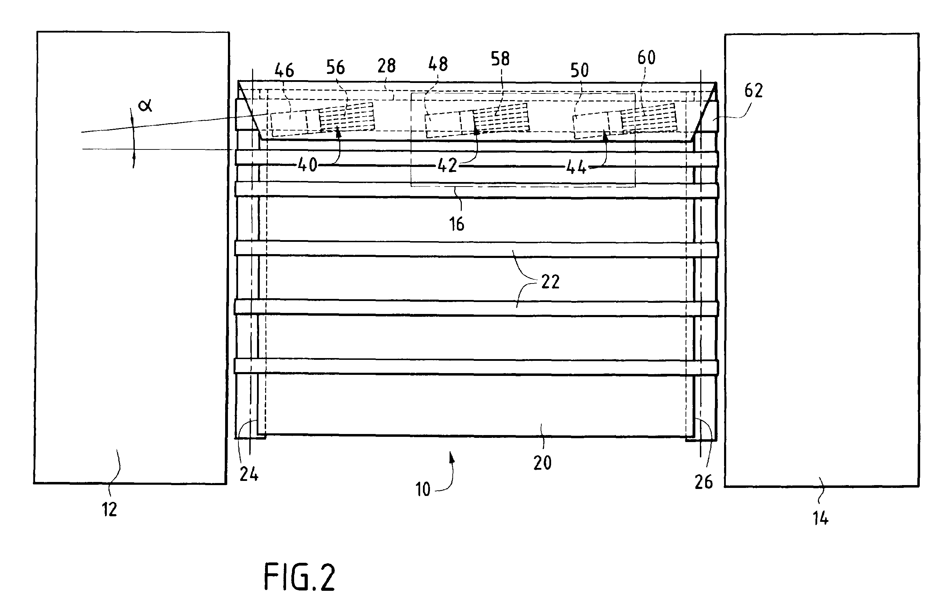

Conformément aux figures 1 et 2, un module de pesée dynamique 10 autonome et motorisé d'un ensemble de traitement de courrier est intercalé entre un module d'alimentation/extraction 12 et un module d'affranchissement 14 d'articles de courrier 16. Ce module de pesée 10 comporte un plateau de pesée 20 et plusieurs courroies ou bandes d'entraînement 22 destinées au transport des articles de courrier d'une position en amont de ce plateau, au niveau d'une face transversale amont 24 du module de pesée, vers une position en aval, au niveau d'une face transversale aval 26 de ce module.

Selon l'invention, ce module de pesée comporte un dispositif de maintien et de guidage des articles de courrier sur le plateau de pesée 20 formé de moyens support 30 constitués d'une plaque de tôle avantageusement en forme de Γ avec une paroi verticale longitudinale 32 solidaire du plateau de pesée, avantageusement par vis 34, au niveau d'une face longitudinale arrière 28 du module de pesée dynamique, et une paroi horizontale supérieure 36 supportant solidairement (par exemple par vis 38) au moins un élément d'appui 40, 42, 44 destiné, lors du transport des articles de courrier de la position en amont 24 vers la position en aval 26, à maintenir et à guider ces articles de courrier sur le plateau de pesée 20 et contre la paroi verticale longitudinale 32 de la plaque formant alors une paroi de mise en référence.

Avantageusement, les moyens support comportent trois éléments d'appui, disposés les uns derrière les autres dans la direction de défilement des articles de courrier, et formés chacun par un bras de maintien élastique 46, 48, 50 incliné vers l'aval dans cette direction de transport et à l'extrémité basse duquel est fixé une brosse souple 52, 54 dont la longueur est relativement importante pour exercer un effort de pression faible mais suffisant sur l'article de courrier 16 et le maintenir plaqué sur les bandes d'entraînement 22, sans freiner ou user celles-ci (voir la figure 1 ).

Cette brosse peut être remplacée par un patin souple en mousse 56, 58, 60, ou plusieurs patins élémentaires semblables juxtaposés, comme illustré à la figure 2.

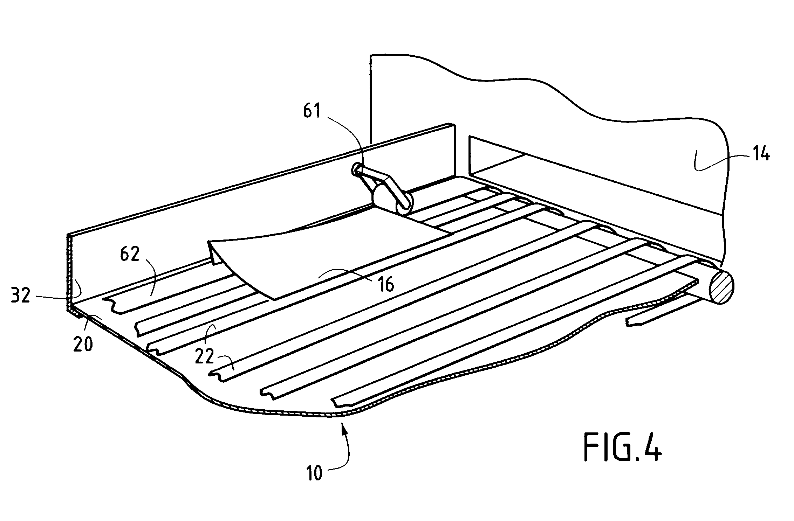

Selon un mode de réalisation alternatif illustré à la figure 3, cet élément d'appui peut aussi comporter un bras de maintien élastique 61 également incliné vers l'aval dans cette direction de transport et à l'extrémité basse duquel est fixé un rouleau de pression souple 63, par exemple en mousse.

Lorsque les moyens support 30 comportent un seul élément d'appui, comme l'illustre la figure 4, celui-ci est de préférence positionné en sortie du module de pesée dynamique 10 afin de créer un "effet d'entonnoir" susceptible de refermer une enveloppe chargée mal fermée 16 sans la contraindre en entrée de module de pesée dynamique. En effet, il peut arriver qu'une enveloppe s'ouvre en glissant sur les courroies d'entraînement après accélération et éjection par l'extracteur 12 qui souvent se trouve légèrement plus haut que le module de pesée 10. Dans ce mode de réalisation, l'élément d'appui unique peut avantageusement être fixé directement à la paroi verticale longitudinale de mise en référence 32.

Quel que soit le mode de réalisation envisagé, ces brosses, patins ou rouleaux souples sont inclinés vers la paroi longitudinale de référence 32 d'un angle déterminé α par rapport à la direction de transport des articles de courrier, de façon à assurer un guidage par taquage ou calage latéral de ces articles contre cette paroi de mise référence pendant toute leur traversée du module de pesée. La valeur de cet angle comprise entre 0° et 35°, dépend notamment de la largeur du module de pesée et du nombre d'éléments d'appui utilisés et de la largeur de la brosse. Pour un module de pesée d'environ 30 cm de large sur lequel est monté trois éléments d'appui équipés chacun d'une brosse de 3 cm de large, cet angle est d'environ 25° Si le nombre d'élément d'appui est moindre, c'est à dire deux voire un seul élément cet angle peut descendre à environ 10° voire moins. Dans le cas où les éléments d'appui sont plus nombreux, au nombre de quatre voire cinq éléments, cet angle peut atteindre 35°.

De préférence, une bande d'entraînement 62 présente une largeur supérieure à celle des autres bandes, et au moins égale à celle de la brosse ou du rouleau souple de pression, afin d'optimiser le guidage et le calage latéral des articles de courrier et d'empêcher l'article de courrier de glisser en reposant directement sur le plateau de pesée.

Afin de limiter le bourrage des articles de courrier de forte épaisseur en entrée du module d'affranchissement 14 résultant de la déformation de ces articles, il est prévu de recouvrir le module de pesée 10 d'un couvercle 18, formant capot, articulé sur les moyens support 30 au niveau de sa paroi horizontale supérieure 36 et dont l'extrémité libre repose sur un rebord (non représenté) solidaire du plateau de pesée. Ce capot jouant le rôle d'une butée supérieure permet ainsi de redresser les articles de courrier présentant une épaisseur élevée (de l'ordre de l'épaisseur maximale admissible par le module d'affranchissement, soit environ 16 mm) et qui auraient été déformés du fait de leur mise en liasse. En outre, ce capot entièrement solidaire du plateau de pesée peut constituer en lui-même un plateau de pesée statique, utilisable dans un mode de pesée manuel, notamment pour les paquets volumineux, qui sont alors directement posés sur ce capot (un tarage préalable prenant en compte le poids de ce capot est bien entendu nécessaire). Cela évite que de tels paquets n'endommagent les bandes d'entraînement ou ne reposent de façon inclinée sur la paroi horizontale des moyens support.

Avantageusement, le capot est réalisé dans une matière translucide comme du Plexiglas. L'articulation sur les moyens support solidaires du module de pesée permet par l'intermédiaire d'une poignée 64 de relever ce capot pour les pesées automatiques en mode portrait, c'est à dire celles relatives à des articles de courrier disposés transversalement à la direction de défilement.

## Revendications

1. Module de pesée dynamique (10) comportant un plateau de pesée (20), une paroi verticale longitudinale de mise en référence (32), des bandes d'entraînement (22, 62) pour le transport des articles de courrier (16) d'une position en amont de ce plateau vers une position en aval et des moyens support (30) solidaires du module de pesée dynamique et sur lequel est monté au moins un élément d'appui (40, 42, 44) destiné à maintenir les articles de courrier sur le plateau de pesée lors de leur transport de ladite position en amont vers ladite position en aval, caractérisé en ce que ledit élément support est incliné vers ladite paroi de référence d'un angle déterminé α de façon à guider ces articles de courrier contre ladite paroi verticale longitudinale de mise en référence (32).

2. Module de pesée dynamique selon la revendication 1, caractérisé en ce que ledit angle déterminé est compris entre quelques degrés et 35°, de préférence égal à environ 25°.

3. Module de pesée dynamique selon la revendication 1, caractérisé en ce que lesdits moyens support sont constitués par ladite paroi verticale longitudinale de mise en référence (32).

4. Module de pesée dynamique selon la revendication 3, caractérisé en ce que lesdits moyens support sont constitués par une plaque présentant une forme en Γ avec une paroi verticale formant ladite paroi verticale longitudinale de mise en référence (32) et une paroi horizontale longitudinale (36) formant support pour lesdits éléments d'appui.

5. Module de pesée dynamique selon la revendication 1, caractérisé en ce que ledit élément d'appui comporte un bras de maintien élastique (46, 48, 50) à l'extrémité basse duquel est fixé une brosse souple (52, 54).

6. Module de pesée dynamique selon la revendication 1, caractérisé en ce que ledit élément d'appui comporte un bras de maintien élastique (61 ) à l'extrémité basse duquel est fixé un rouleau de pression souple (63), par exemple en mousse.

7. Module de pesée dynamique selon la revendication 1, caractérisé en ce que ledit élément d'appui comporte un bras de maintien élastique (46, 48, 50) à l'extrémité basse duquel est fixé un patin souple (56, 58, 60) formé de un ou plusieurs patins élémentaires juxtaposés.

8. Module de pesée dynamique selon la revendication 1, caractérisé en ce que lesdits moyens support comportent en outre un couvercle (18) formant capot articulé pour le module de pesée dynamique.

9. Module de pesée dynamique selon la revendication 8, caractérisé en ce que ledit couvercle constitue également un plateau de pesée statique.

10. Module de pesée dynamique selon la revendication 1, caractérisé en ce qu'il comporte au niveau dudit élément d'appui une bande d'entraînement (62) dont la largeur est moins égale à celle de la brosse (52, 54), du patin (56, 58, 60) ou du rouleau de pression (60).
